# EUROPÄISCHE PATENTSCHRIFT

(11) **EP 4 122 053 B1**
(45) Veröffentlichungstag und Bekanntmachung des Hinweises auf die Patenterteilung: **16.10.2024**
(21) Anmeldenummer: 21714304.9
(22) Anmeldetag: 08.03.2021
(51) Int. Cl.: H01R 13/514, H01R 25/00

(54) **MODULARER HOCHSTROMSTECKVERBINDER**
MODULAR HIGH-CURRENT CONNECTOR
CONNECTEUR MODULAIRE À COURANT ÉLEVÉ

(30) Priorität: 18.03.2020 DE 102020107393
(43) Veröffentlichungstag der Anmeldung: 25.01.2023
(73) Patentinhaber: HARTING Electric Stiftung & Co. KG, 32339 Espelkamp (DE)
(72) Erfinder: HOPPE, Nando, 32339 Espelkamp (DE); KRÜGER, Benjamin, 32339 Espelkamp (DE)
(86) Internationale Anmeldenummer: PCT/DE2021/100233
(87) Internationale Veröffentlichungsnummer: WO 2021/185406

(56) Entgegenhaltungen:
- DE-A1- 102016 115 678
- DE-B3- 102018 127 720

## Beschreibung

Die Erfindung geht aus von einem modularen Hochstromsteckverbinder nach der Gattung des unabhängigen Anspruchs 1.

Derartige Hochstromsteckverbinder werden für Hochstromanwendungen und insbesondere zur Energieversorgung von Trafos verwendet.

### Stand der Technik

Die DE 1 983 593 U1 zeigt einen Hochstromsteckverbinder. Aufgrund des parallel zur Steckrichtung verlaufenden Kabelabgangs, wird bei der Installation derartiger Steckverbinder viel Platz benötigt.

Das Deutsche Patent- und Markenamt hat in der Prioritätsanmeldung zu vorliegender Anmeldung den folgenden Stand der Technik recherchiert: DE 10 2018 127 720 B3 und DE 10 2016 115 678 A1.

### Aufgabenstellung

Die Aufgabe der Erfindung besteht darin einen Hochstromsteckverbinder vorzuschlagen, der kostengünstig hergestellt und platzsparend und einfach installiert werden kann.

Die Aufgabe wird durch den Gegenstand der unabhängigen Ansprüche gelöst.

Vorteilhafte Ausgestaltungen der Erfindung sind in den Unteransprüchen und der folgenden Beschreibung angegeben.

Der erfindungsgemäße Hochstromsteckverbinder weist ein erstes Gehäuseteil und ein damit verbundenes zweites Gehäuseteil auf. Die Verbindung der beiden Gehäuseteile kann über eine Schraubverbindung realisiert sein.

Im ersten Gehäuseteil ist ein Stiftkontakt gehalten. Der Stiftkontakt ist im Wesentlichen zylinderförmig ausgebildet und weist einen Anschlussbereich und einen Kontaktbereich zur elektrischen Kontaktierung einer Gerätebuchse oder eines Gegensteckverbinders aufweist. Das erste Gehäuseteil bildet den Steckbereich bzw. die Steckseite des Hochstromsteckverbinders aus. Der Kontaktstift bildet demnach das Kontaktierungsmittel für eine Buchse, beispielsweise eine Trafobuchse. Dazu ragt der Kontaktbereich des Stiftkontakts steckseitig aus dem Hochstromsteckverbinder heraus.

Erfindungsgemäß weist der Hochstromsteckverbinder zumindest einen Isolierkörper auf, welcher zumindest teilweise im ersten Gehäuseteil angeordnet bzw. von diesem gehalten ist. Der Isolierkörper ragt steckseitig aus dem ersten Gehäuseteil heraus.

Im gesteckten Zustand greift der Isolierkörper durch die Gerätewand bzw. die Gehäusewand des Trafogehäuses hindurch. Das Geräte- bzw. Trafogehäuse kann zumindest teilweise mit Öl oder vergleichbaren Schmierstoffen gefüllt sein. Daher ist es vorteilhaft, wenn der Stiftkontakt zwei umlaufende Nuten aufweist, in welche jeweils ein Dichtring angeordnet ist. Hierdurch wird der Hochstromsteckverbinder steckseitig gegen das Eindringen von unerwünschten Medien (Öl, Wasser, Staub usw.) geschützt.

Vorteilhafterweise umfasst der Isolierkörper den Stiftkontakt zumindest teilweise. Dabei verläuft der Isolierkörper vorzugsweise vom umlaufenden Ring entgegen der Steckrichtung in den Anschlussbereich des Stiftkontakts hinein. Der Anschlussbereich wird jedoch nicht vollständig vom Isolierkörper umschlossen, da hier noch Platz für die elektrische Kontaktierung von zumindest einem Anschlusskontaktelement benötigt wird.

Im zweiten Gehäuseteil ist vorzugsweise ein Anschlusskontaktelement zur elektrischen Verbindung mit einem anzuschließenden Leitungen angeordnet. Das zweite Gehäuseteil weist eine offene Gehäusewand auf. Diese offene Gehäuseseite kann über einen Gehäusedeckel verschlossen werden. Die Gehäusewand bildet jedoch gleichzeitig die Anschlussstelle zur Fixierung eines weiteren Gehäuseteils.

Vorzugsweise ist es möglich den modularen Hochstromsteckverbinder mit einem dritten Gehäuseteil auszustatten. Das dritte Gehäuseteil wird an das zweite Gehäuseteil fixiert. Dazu wird vorzugsweise eine Schraubverbindung verwendet. In dem dritten Gehäuseteil ist analog zum zweiten Gehäuseteil ein weiteres Anschlusskontaktelement zur elektrischen Verbindung mit einer weiteren anzuschließenden Leitung angeordnet.

Es ist möglich den modularen Hochstromsteckverbinder mit weiteren Gehäuseteilen, einem vierten, einem fünften und/oder einem sechsten Gehäuseteil, auszustatten. In jedem dieser Gehäuseteile ist jeweils ein Anschlusskontaktelement zur elektrischen Verbindung mit jeweils einer weiteren anzuschließenden Leitung angeordnet. Die Gehäuseteile werden hintereinander angeordnet und aneinander fixiert. Das dritte Gehäuseteil ist dann am zweiten Gehäuseteil fixiert, das vierte Gehäuseteil ist am dritten Gehäuseteil fixiert usw. Das jeweils letzte Gehäuseteil wird über den oben erwähnten Gehäusedeckel geschlossen, so dass der Hochstromsteckverbinder bzw. dessen Gehäuse insgesamt geschlossen und mediendicht ist. Hierdurch kann der Hochstromsteckverbinder beliebig erweitert werden. Hierfür können gleiche Bauteile verwendet werden.

An die einzelnen Anschlusskontaktelemente sind jeweils elektrische Leitungen angeschlossen. Bevorzugterweise sind die jeweiligen Anschlusskontaktelemente mit dem Stiftkontakt elektrisch leitend verbunden. Über mehrere, parallel angeschlossene Leitungen können höhere Ströme über den Stiftkontakt übertragen werden. Bei einer Leitung kann der Hochstromsteckverbinder beispielsweise 400A, bei zwei Leitungen 800A und bei drei Leitungen entsprechend 1200A übertragen. Der erfindungsgemäße Hochstromsteckverbinder kann beliebig erweitert und damit an verschiedene Einsatzgebiete angepasst werden.

In einer besonders vorteilhaften Ausführungsform der Erfindung weisen die Anschlusskontaktelemente jeweils einen Anschlussbereich und einen Kontaktbereich auf. An den Anschlussbereich werden die elektrischen Leitungen angeschlossen. Dies geschieht über eine Crimpverbindung. Dazu weist der Anschlussbereich eine zylinderförmige Öffnung auf. Eine Crimpverbindung bietet einen hohen Vibrationsschutz. Eine solche Anschlusstechnik findet daher insbesondere im Bahnbereich eine hohe Akzeptanz. Der Kontaktbereich des Anschlusskontaktelements weist eine zylinderförmige Durchgangsöffnung auf. Zur elektrischen Kontaktierung der Anschlusskontaktelemente wird der Stiftkontakt in die Durchgangsöffnungen der Anschlusskontaktelemente eingeführt. Die Durchmesser von Stiftkontakt und den einzelnen Durchgangsöffnungen sind dazu aufeinander abgestimmt.

Vorzugsweise sind die Öffnung bzw. die Crimpöffnung und die Durchgangsöffnung des jeweiligen Anschlusskontaktelements orthogonal zueinander ausgerichtet. Dadurch verlaufen die Anschlussrichtung der Leitungen und die Steckrichtung des Hochstromsteckverbinders ebenfalls orthogonal zueinander. Die Leitungen verlaufen flach vom angeschlossenen Gerät weg, was insbesondere im Bahnbereich Vorteile bietet, da die Leitungen flach an einer Bahnwand verlaufen und damit platzsparend verlegt werden können.

Um eine optimale elektrische Kontaktierung zwischen dem Anschlusskontaktelement und dem Stiftkontakt zu gewährleisten, ist vorzugsweise innerhalb der zylinderförmigen Durchgangsöffnung des jeweiligen Anschlusskontaktelements ein umlaufendes Kontaktband angeordnet ist.

Vorzugsweise ist der Stiftkontakt im Wesentlichen zylinderförmig ausgestaltet und weist einen Anschlussbereich und einen Kontaktbereich auf. Der Anschlussbereich bildet den oben beschriebenen elektrischen Kontakt zwischen dem Stiftkontakt und den Anschlusskontaktelementen aus. Der Kontaktbereich bildet den elektrischen Kontakt zu einer Geräte- oder Anschlussbuchse.

Der Kontaktbereich des Stiftkontakts weist ein umlaufendes Gewinde auf. Außerdem weist der Kontaktbereich des Stiftkontakts einen umlaufenden Ring auf. Oder anders gesagt verläuft das umlaufende Gewinde vom umlaufenden Ring ausgehend in Steckrichtung des Stiftkontakts. Das umlaufende Gewinde kann bis zur der Kontaktspitze des Stiftkontakts verlaufen. Dadurch ist es möglich den Stiftkontakt mit einem so genannten Kabelschuh zu kontaktieren, der durch eine auf das Gewinde aufgeschraubte Mutter steckseitig gegen den umlaufenden Ring gepresst wird. Eine derartige Kontaktierung hat sich als besonders langlebig und extrem Rüttelfest herausgestellt. Daher ist diese Kontaktierungstechnik insbesondere im Bahnbereich geeignet.

Vorzugsweise hat der Stiftkontakt im Kontaktbereich eine axiale Öffnung, die beispielsweise als Aufnahme für einen so genannten Imbusschlüssel dient. Dadurch kann der Kontaktstift beim Festziehen der Kontermutter für den Kabelschuh fixiert werden.

Es ist vorteilhaft, wenn zumindest ein Gehäuseteil ein thermochromes Element aufweist oder aus einem solchen Material besteht. Das thermochrome Element bzw. das thermochrome Material ist dazu ausgelegt ist, eine Überbelastung des Hochstromsteckverbinders optisch anzuzeigen. Dies kann beispielsweise durch eine Veränderung der Farbe des Elements oder des Materials erfolgen. Hierdurch können überlastete Steckverbinder schnell identifiziert werden.

### Ausführungsbeispiel

Ein Ausführungsbeispiel der Erfindung ist in den Zeichnungen dargestellt und wird im Folgenden näher erläutert. Es zeigen:
- Fig. 1: eine perspektivische Darstellung zweier erfindungsgemäßer Hochstromsteckverbinder,
- Fig. 2: eine seitliche Schnittdarstellung eines erfindungsgemäßen Hochstromsteckverbinders,
- Fig. 3: eine Schnittdarstellung eines Stiftkontakts welcher mit zwei Anschlusskontaktelementen im elektrischen Kontakt steht,
- Fig. 4: eine perspektivische Darstellung eines Stiftkontakts welcher mit zwei Anschlusskontaktelementen im elektrischen Kontakt steht,
- Fig. 5: eine Schnittdarstellung eines Anschlusskontaktelements,
- Fig. 6: eine Explosionsdarstellung eines erfindungsgemäßen Hochstromsteckverbinders und
- Fig. 7: eine perspektivische Schnittdarstellung des ersten Gehäuseteils des erfindungsgemäßen Hochstromsteckverbinders.

Die Figuren enthalten teilweise vereinfachte, schematische Darstellungen. Zum Teil werden für gleiche, aber gegebenenfalls nicht identische Elemente identische Bezugszeichen verwendet. Verschiedene Ansichten gleicher Elemente könnten unterschiedlich skaliert sein.

Richtungsangaben wie beispielsweise "links", "rechts", "oben" und "unten" sind mit Bezug auf die jeweilige Figur zu verstehen und können in den einzelnen Darstellungen gegenüber dem dargestellten Objekt variieren.

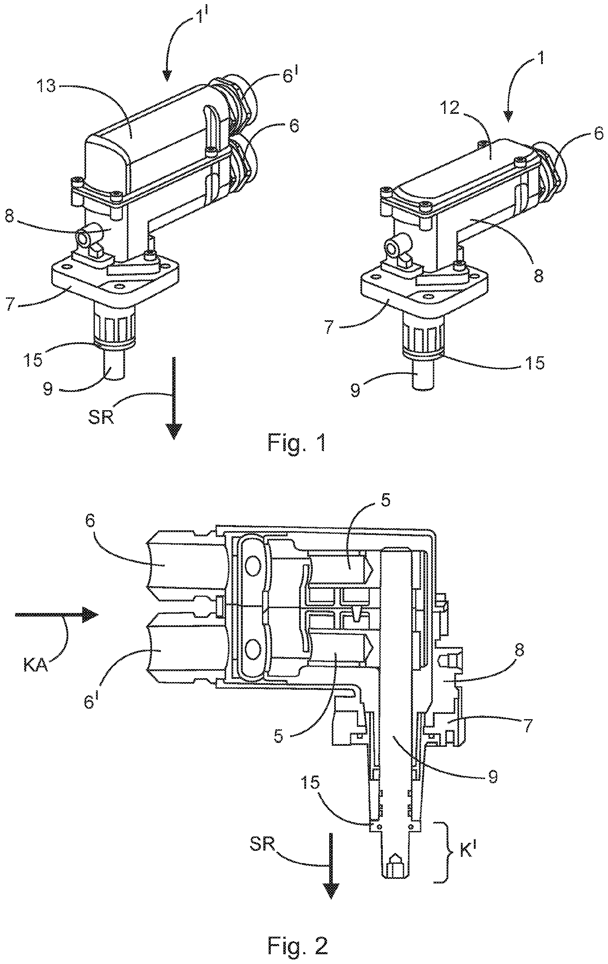

Die Figur 1 zeigt eine perspektivische Darstellung von zwei erfindungsgemäßen Hochstromsteckverbindern 1, 1'. In der kleineren Version des Hochstromsteckverbinders 1 ist eine elektrische Leitung (nicht gezeigt) angeschlossen. In der größeren Version 1' sind zwei elektrische Leitungen angeschlossen. Die größere Version des Hochstromsteckverbinders 1' ist damit in der Lage eine höhere Stromstärke zu übertragen. In Figur 2 ist die Schnittdarstellung der größeren Hochstromsteckverbinderversion 1' gezeigt. Die am Hochstromsteckverbinder 1, 1' angeschlossenen elektrischen Leitungen werden über eine Kabelverschraubung 6, 6' fixiert.

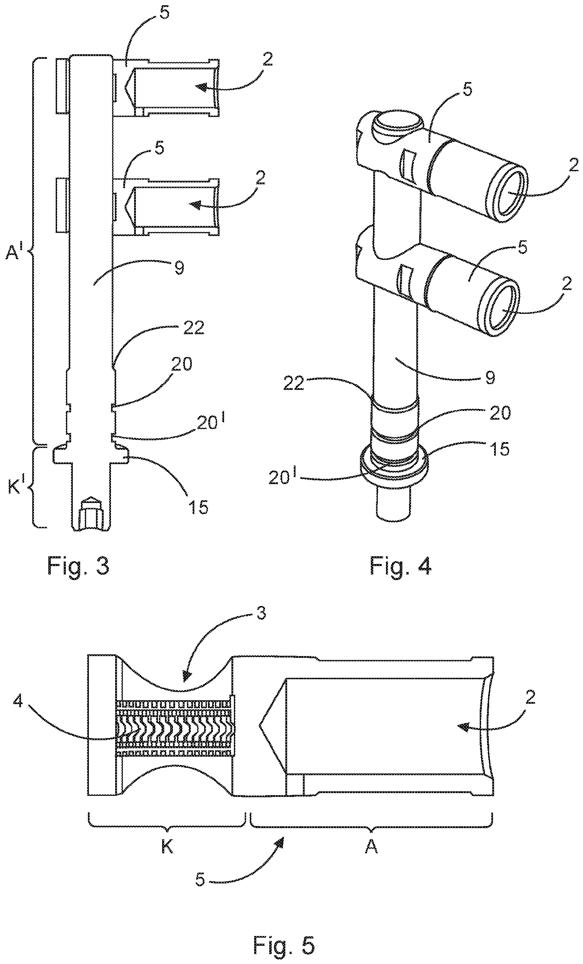

Der Hochstromsteckverbinder 1, 1' weist ein erstes Gehäuseteil 7 auf, in denen ein Stiftkontakt 9 angeordnet ist. Der Stiftkontakt 9 ist in den Figuren 3 und 4 detailliert zu sehen. Der Stiftkontakt 9 weist einen Kontaktbereich K` und einen Anschlussbereich A' auf. Der Kontaktbereich K` des Stiftkontakts 9 ragt steckseitig aus dem ersten Gehäuseteil 7 heraus und bildet im gesteckten Zustand den elektrischen Kontakt mit einer Gerätebuchse (nicht gezeigt).

Der Stiftkontakt 9 ragt mit seinem Anschlussbereich A' in ein zweites Gehäuseteil 8 des Hochstromsteckverbinders 1, 1' hinein. Hier steht der Stiftkontakt 9 in einem elektrisch leitenden Kontakt mit zumindest einem Anschlusskontaktelement 5. An dem Anschlusskontaktelement 5 ist jeweils eine elektrische Leitung (nicht gezeigt) per Crimptechnik angeschlossen. Der Stiftkontakt 9 und das Anschlusskontaktelement 5 bzw. deren Hauptsymmetrieachsen sind orthogonal zueinander ausgerichtet. Dadurch stehen auch die Steckrichtung und die Kabelanschlussrichtung des Hochstromsteckverbinders senkrecht zueinander.

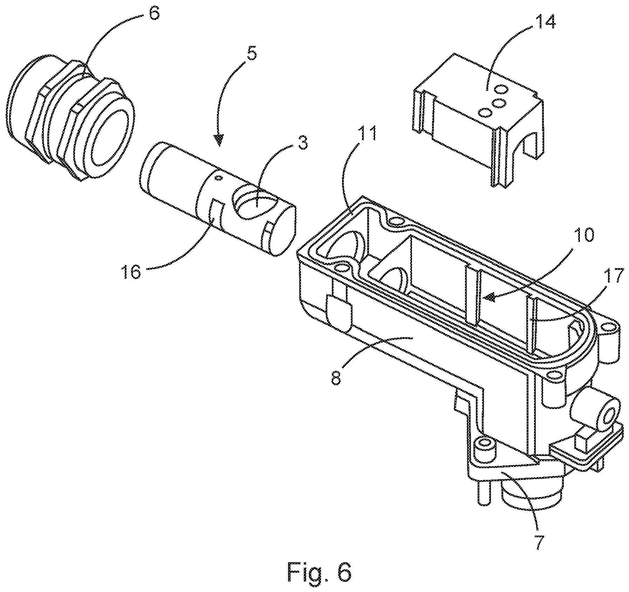

In Figur 6 ist zu erkennen, dass das zweite Gehäuseteil 8 eine offene Gehäusewand 10 aufweist. Die Umrandung der offenen Gehäusewand 10 ist mit einer umlaufenden Nut 11 versehen, in welche eine Dichtung (nicht gezeigt) zur Medienabdichtung des Hochstromsteckverbinders 1, 1' eingelegt ist. Die offene Gehäusewand 10 kann über einen Gehäusedeckel 12 verschlossen werden. Zur modularen Erweiterung des Hochstromsteckverbinders 1' kann auf die offene Gehäusewand 10 ein weiteres Gehäuseteil, nämlich ein drittes Gehäuseteil 13, aufgesetzt werden.

In Figur 2 ist zu erkennen, dass auch das dritte Gehäuseteil 13 mit einem Anschlusskontaktelement 5 versehen ist, welches anschlussseitig mit einer weiteren angeschlossenen Leitung (nicht gezeigt) versehbar ist und kontaktseitig mit dem Stiftkontakt 9 elektrisch kontaktiert ist.

In Figur 5 ist ein erfindungsgemäßes Anschlusskontaktelement 5 im Schnitt dargestellt. Das Anschlusskontaktelement weist beidseitig eine Nut 16 auf. In diese Nuten 16 greifen im zweiten Gehäuseteil 8 angeformte Stege 17 ein, wodurch eine Verdrehsicherung des Anschlusskontaktelements gewährleistet ist. Das Anschlusskontaktelement 5 wird über ein Fixiermittel 14 im zweiten Gehäuseteil 8 fixiert. Das selbe Fixierelement 14 kann natürlich auch für weitere Gehäuseteile, beispielsweise ein drittes Gehäuseteil 13, verwendet werden.

Das Anschlusskontaktelement 5 weist einen Anschlussbereich A und einen Kontaktbereich K auf. Der Anschlussbereich A weist eine zylinderförmige Öffnung 2 auf, die für eine Crimpverbindung mit einer anzuschließenden elektrischen Leitung vorgesehen ist. Der Kontaktbereich K des Anschlusskontaktelements 5 weist eine zylinderförmige Durchgangsöffnung 3 auf. Zur elektrischen Verbindung zwischen Anschlusskontaktelement 5 und Stiftkontakt 9 wird der Stiftkontakt 9 in diese Durchgangsöffnung 3 eingeführt. Innerhalb der Durchgangsöffnung 3 ist ein Kontaktband 4 angeordnet, welches eine zuverlässige elektrische Kontaktierung zwischen Anschlusskontaktelement 5 und Stiftkontakt 9 gewährleistet.

Die Hauptsymmetrieachsen der Crimpöffnung 2 und der Durchgangsöffnung 3 sind orthogonal zueinander ausgerichtet. Dadurch sind Steckrichtung SR und Kabelanschlussrichtung KA des Hochstromsteckverbinders 1, 1' senkrecht zueinander ausgerichtet. Die Leitungen verlaufen damit flach vom Gerät weg, wodurch eine einfache Leitungsführung bzw. -verlegung möglich ist.

Der Kontaktbereich K` des Stiftkontakts 9 wird durch einen umlaufenden Ring 15 abgeschlossen. Vom umlaufenden Ring 15 ausgehend in Richtung seiner Kontaktspitze weist der Kontaktstift 9 ein umlaufendes Gewinde 20 auf. Beim Anschließen des Hochstromsteckverbinders 1, 1' an beispielsweise einen Trafo, wird ein ringförmiger Kabelschuh (nicht gezeigt) um die Kontaktspitze des Kontaktstiftes 9 geführt. Über zumindest eine Gewindeschraube (nicht gezeigt) wird der Kabelschuh fixiert und dabei an die Ringfläche des umlaufenden Rings 15 gepresst. Vorzugsweise wird hier noch eine zweite Gewindeschraube bzw. Kontermutter verwendet, um optimalen Vibrationsschutz zu gewährleisten.

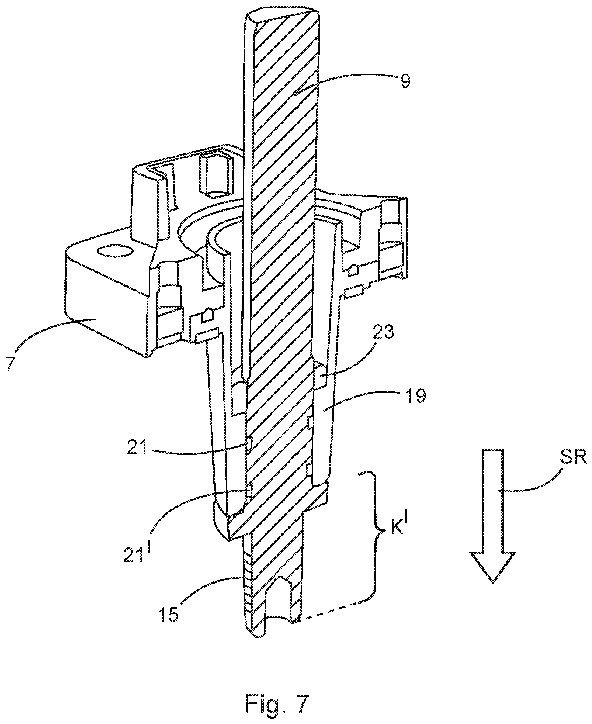

In Figur 7 ist das erste Gehäuseteil 7 des Hochstromsteckverbinders 1 in einer perspektivischen Schnittdarstellung zu sehen. Der Kontaktstift 9 ist so ausgerichtet, dass er mit seinem Kontaktbereich K` in Steckrichtung SR aus dem Isolierkörper 19 herausragt. Der Isolierkörper 19 verläuft oberhalb des umlaufenden Rings - entgegen der Steckrichtung SR - zum ersten Gehäuseteil 7 des Hochstromsteckverbinders 1. Dabei ragt der Isolierkörper 19 aus dem ersten Gehäuseteil 7 heraus und wird lediglich in seinem oberen Bereich vom ersten Gehäuseteil 7 gehalten. Dieser frei verlaufende Teil des Isolierkörpers 19 ragt später in eine Gerätewand bzw. in das Trafogehäuse hinein.

Der Kontaktstift 9 weist in dem Bereich, der innerhalb des Isolierkörpers 19 verläuft, zwei umlaufende Nuten 20, 20' auf. In diese Nuten 20, 20' ist jeweils ein Dichtring 21, 21' eingelegt. Dadurch wird der Hochstromsteckverbinder 1 steckseitig mediendicht abgedichtet.

Der Kontaktstift 9 ragt - entgegen der Steckrichtung SR - aus dem ersten Gehäuseteil 7 heraus in ein zumindest ein zweites Gehäuseteil 8 und ggf. auch in ein drittes Gehäuseteil 13 hinein. In diesem Bereich werden die oben bereits erwähnten Anschlusskontaktelemente 5 an den Stiftkontakt 9 angeschlossen.

Der Kontaktstift 9 weist in Anschlussrichtung einen Absatz 22 auf. Über diesen Absatz 22 kann der Stiftkontakt 9, mithilfe eines Fixierungsmittels 23, in das erste Gehäuseteil 7 fixiert bzw. festgeklemmt werden.

Der Stiftkontakt 9 besteht vorzugsweise aus reinem Kupfer, um eine entsprechende Stromtragfähigkeit zu gewährleisten. Mit reinem Kupfer ist gemeint, dass das Material einen Kupferanteil von mindestens 99 Gewichtsprozent aufweist. Auch das Anschlusskontaktelement oder die Anschlusskontaktelemente können aus einem solchen reinem Kupfer bestehen.

Auch wenn in den Figuren verschiedene Aspekte oder Merkmale der Erfindung jeweils in Kombination gezeigt sind, ist für den Fachmann - soweit nicht anders angegeben - ersichtlich, dass die dargestellten und diskutierten Kombinationen nicht die einzig möglichen sind. Insbesondere können einander entsprechende Einheiten oder Merkmalskomplexe aus unterschiedlichen Ausführungsbeispielen miteinander ausgetauscht werden.

### Bezugszeichenliste

- 1: Hochstromsteckverbinder
- 2: Öffnung
- 3: Durchgangsöffnung
- 4: Kontaktband
- 5: Anschlusskontaktelement
- 6: Kabelverschraubung
- 7: Erstes Gehäuseteil
- 8: Zweites Gehäuseteil
- 9: Stiftkontakt
- 10: Offene Gehäusewand
- 11: Nut
- 12: Gehäusedeckel
- 13: Drittes Gehäuseteil
- 14: Fixiermittel
- 15: Umlaufender Ring
- 16: Nut
- 17: Steg
- 18: Gewinde
- 19: Isolierkörper
- 20: Nut
- 21: Dichtring
- 22: Absatz
- 23: Fixierungsmittel

- A, A': Anschlussbereich
- K, K': Kontaktbereich
- KA: Kabelanschlussrichtung
- SR: Steckrichtung

## Patentansprüche

1. Modularer Hochstromsteckverbinder (1), welcher ein erstes Gehäuseteil (7) und ein damit verbundenes zweites Gehäuseteil (8) aufweist, wobei der Hochstromsteckverbinder (1) einen Stiftkontakt (9) aufweist, wobei der Stiftkontakt (9) im Wesentlichen zylinderförmig ausgebildet ist und einen Anschlussbereich (A') und einen Kontaktbereich (K') zur elektrischen Kontaktierung einer Gerätebuchse oder eines Gegensteckverbinders aufweist, wobei der Kontaktbereich (K') des Stiftkontakts (9) steckseitig aus dem Hochstromsteckverbinder (1) herausragt
**dadurch gekennzeichnet, dass**
der Hochstromsteckverbinder (1) einen Isolierkörper (19) aufweist, welcher zumindest teilweise im ersten Gehäuseteil (7) angeordnet ist und welcher steckseitig aus dem ersten Gehäuseteil (7) herausragt.

2. Modularer Hochstromsteckverbinder (1) nach Anspruch 1
**dadurch gekennzeichnet, dass**
der Kontaktbereich (K') des Stiftkontakts (9) einen umlaufenden Ring (15) und ein umlaufendes Gewinde (18) aufweist und wobei das umlaufende Gewinde vom umlaufenden Ring (15) ausgehend in Steckrichtung (SR) des Stiftkontakts (9) verläuft.

3. Modularer Hochstromsteckverbinder (1) nach vorstehendem Anspruch **dadurch gekennzeichnet, dass** der Anschlussbereich (A') des Stiftkontakts (9) zumindest teilweise vom Isolierkörper (19) umfasst ist.

4. Modularer Hochstromsteckverbinder (1) nach den vorstehenden Ansprüchen 2 und 3 **dadurch gekennzeichnet, dass** der Isolierkörper (19) den Stiftkontakt (9) vom umlaufenden Ring (15) ausgehend entgegen der Steckrichtung (SR) umfasst..

5. Modularer Hochstromsteckverbinder (1) nach einem der vorstehenden Ansprüche 3 bis 5 **dadurch gekennzeichnet, dass** der Stiftkontakt (9) zwei umlaufende Nuten (20, 20') aufweist, in welche jeweils ein Dichtring (21) angeordnet ist.

6. Modularer Hochstromsteckverbinder (1) nach einem der vorstehenden Ansprüche **dadurch gekennzeichnet, dass** der Hochstromsteckverbinder zumindest ein Anschlusskontaktelement (5) zur elektrischen Verbindung mit einer anzuschließenden Leitung aufweist und
dass das Anschlusskontaktelement (5) oder die Anschlusskontaktelemente (5) jeweils mit dem Stiftkontakt (9) elektrisch leitend verbunden sind.

7. Modularer Hochstromsteckverbinder (1) nach einem der vorstehenden Ansprüche **dadurch gekennzeichnet, dass** das zweite Gehäuseteil (8) eine offene Gehäusewand (10) aufweist, welche mit einem Gehäusedeckel (12) verschließbar ist oder an welche ein weiteres Gehäuseteil fixierbar ist.

8. Modularer Hochstromsteckverbinder (1) nach einem der vorstehenden Ansprüche **dadurch gekennzeichnet, dass** der modulare Hochstromsteckverbinder (1) ein drittes Gehäuseteil (13) aufweist.

9. Modularer Hochstromsteckverbinder (1) nach vorstehendem Anspruch **dadurch gekennzeichnet, dass** der modulare Hochstromsteckverbinder (1) weitere Gehäuseteile, insbesondere ein viertes, ein fünftes und ein sechstes Gehäuseteil, aufweist und dass die weiteren Gehäuseteile analog zum dritten Gehäuseteil (13) ausgeführt sind.

10. Modularer Hochstromsteckverbinder (1) nach vorstehendem Anspruch **dadurch gekennzeichnet, dass** in dem zweiten Gehäuseteil (8) und/oder in dem dritten Gehäuseteil (13) und/oder in dem vierten Gehäuseteil und/oder in dem fünften Gehäuseteil und/oder in dem sechsten Gehäuseteil jeweils ein Anschlusskontaktelement (5) angeordnet ist.

11. Modularer Hochstromsteckverbinder (1) nach einem der vorstehenden Ansprüche **dadurch gekennzeichnet, dass** die alle Gehäuseteile aus einem Aluminium-Druckguss-Material bestehen.

12. Modularer Hochstromsteckverbinder (1) nach Anspruch 1
**dadurch gekennzeichnet, dass**
der Isolierkörper (19) aus Polyamid besteht.

13. Modularer Hochstromsteckverbinder (1) nach einem der vorstehenden Ansprüche **dadurch gekennzeichnet, dass** der Stiftkontakt (9) aus reinem Kupfer besteht.

14. Modularer Hochstromsteckverbinder (1) nach Anspruch 6 **dadurch gekennzeichnet, dass**
das Anschlusskontaktelement oder die Anschlusskontaktelemente aus reinem Kupfer bestehen.

15. Modularer Hochstromsteckverbinder (1) nach einem der vorstehenden Ansprüche **dadurch gekennzeichnet, dass** das erstes Gehäuseteil (7) und das damit verbundene zweite Gehäuseteil (8) einteilig ausgeführt sind.

16. Modularer Hochstromsteckverbinder (1) nach einem der vorstehenden Ansprüche **dadurch gekennzeichnet, dass** zumindest ein Gehäuseteil ein thermochromes Element aufweist.

17. Modularer Hochstromsteckverbinder (1) nach einem der vorstehenden Ansprüche **dadurch gekennzeichnet, dass** das thermochrome Element dazu ausgelegt ist, eine Überbelastung des Hochstromsteckverbinders (1) optisch anzuzeigen.

## Claims

1. Modular high-current connector (1) which has a first housing part (7) and a second housing part (8) connected thereto, wherein the high-current connector (1) has a pin contact (9), wherein the pin contact (9) is substantially cylindrical and has a connection region (A') and a contact region (K') for establishing electrical contact with a device socket or a mating connector, wherein the contact region (K') of the pin contact (9) protrudes from the high-current connector (1) on the plug-in side, **characterized in that**
the high-current connector (1) has an insulating body (19) which is arranged at least in part in the first housing part (7) and which protrudes from the first housing part (7) on the plug-in side.

2. Modular high-current connector (1) according to Claim 1,
**characterized in that**
the contact region (K') of the pin contact (9) has a circumferential ring (15) and a circumferential thread (18), and wherein the circumferential thread runs in the plug-in direction (SR) of the pin contact (9) starting from the circumferential ring (15) .

3. Modular high-current connector (1) according to the preceding claim,
**characterized in that**
the connection region (A') of the pin contact (9) is at least partially enclosed by the insulating body (19).

4. Modular high-current connector (1) according to preceding Claims 2 and 3,
**characterized in that**
the insulating body (19) encloses the pin contact (9) against the plug-in direction (SR) starting from the circumferential ring (15).

5. Modular high-current connector (1) according to one of preceding Claims 3 to 5,
**characterized in that**
the pin contact (9) has two circumferential grooves (20, 20'), in each of which there is arranged a ring seal (21).

6. Modular high-current connector (1) according to one of the preceding claims,
**characterized in that**
the high-current connector has at least one connection contact element (5) for establishing an electrical connection to a line to be connected, and **in that** the connection contact element (5) or the connection contact elements (5) are each electrically conductively connected to the pin contact (9).

7. Modular high-current connector (1) according to one of the preceding claims,
**characterized in that**
the second housing part (8) has an open housing wall (10) which is closable by means of a housing cover (12) or to which a further housing part is fixable.

8. Modular high-current connector (1) according to one of the preceding claims,
**characterized in that**
the modular high-current connector (1) has a third housing part (13).

9. Modular high-current connector (1) according to the preceding claim,
**characterized in that**
the modular high-current connector (1) has further housing parts, in particular a fourth, a fifth and a sixth housing part, and **in that** the further housing parts are embodied similarly to the third housing part (13).

10. Modular high-current connector (1) according to the preceding claim,
**characterized in that**
a connection contact element (5) is arranged in each case in the second housing part (8) and/or in the third housing part (13) and/or in the fourth housing part and/or in the fifth housing part and/or in the sixth housing part.

11. Modular high-current connector (1) according to one of the preceding claims,
**characterized in that**
all housing parts consist of an aluminium die-cast material.

12. Modular high-current connector (1) according to Claim 1,
**characterized in that**
the insulating body (19) consists of polyamide.

13. Modular high-current connector (1) according to one of the preceding claims,
**characterized in that**
the pin contact (9) consists of pure copper.

14. Modular high-current connector (1) according to Claim 6,
**characterized in that**
the connection contact element or the connection contact elements consist of pure copper.

15. Modular high-current connector (1) according to one of the preceding claims,
**characterized in that**
the first housing part (7) and the second housing part (8) connected thereto are embodied in one piece.

16. Modular high-current connector (1) according to one ' of the preceding claims,
**characterized in that**
at least one housing part has a thermochromic element.

17. Modular high-current connector (1) according to one of the preceding claims,
**characterized in that**
the thermochromic element is designed to visually indicate an overloading of the high-current connector (1).

## Revendications

1. Connecteur enfichable modulaire à haute intensité (1), lequel comporte une première partie de boîtier (7) et une deuxième partie de boîtier (8) reliée à la première, le connecteur enfichable à haute intensité (1) comportant un contact à broche (9), le contact à broche (9) étant sensiblement cylindrique et comportant une zone de raccordement (A') et une zone de contact (K') destinée à venir en contact électrique avec une douille d'appareil ou un connecteur enfichable homologue, la zone de contact (K') du contact à broche (9) faisant saillie du connecteur enfichable à haute intensité (1) du côté enfichage,
**caractérisé en ce que**
le connecteur enfichable à haute intensité (1) comporte un corps isolant (19) qui est disposé au moins en partie dans la première partie de boîtier (7) et qui fait saillie de la première partie de boîtier (7) du côté enfichage.

2. Connecteur enfichable modulaire à haute intensité (1) selon la revendication 1, **caractérisé en ce que** la zone de contact (K') du contact à broche (9) comporte une bague périphérique (15) et un filetage périphérique (18) et le filetage périphérique s'étendant depuis la bague périphérique (15) dans la direction d'enfichage (SR) du contact à broche (9).

3. Connecteur enfichable modulaire à haute intensité (1) selon la revendication précédente, **caractérisé en ce que** la zone de raccordement (A') du contact à broche (9) est au moins partiellement entourée par le corps isolant (19).

4. Connecteur enfichable modulaire à haute intensité (1) selon les revendications précédentes 2 et 3, **caractérisé en ce que** le corps isolant (19) entoure le contact à broche (9) depuis la bague périphérique (15) dans la direction opposée à la direction d'enfichage (SR).

5. Connecteur enfichable modulaire à haute intensité (1) selon l'une des revendications précédentes 3 à 5, **caractérisé en ce que** le contact à broche (9) comporte deux rainures périphériques (20, 20') dans chacune desquelles une bague d'étanchéité (21) est disposée.

6. Connecteur enfichable modulaire à haute intensité (1) selon l'une des revendications précédentes, **caractérisé en ce que** le connecteur enfichable à haute intensité comporte au moins un élément de contact et de raccordement (5) destiné à la liaison électrique à une ligne à raccorder et **en ce que** l'élément de contact et de raccordement (5) ou les éléments de contact et de raccordement (5) sont chacun reliés électriquement au contact à broche (9).

7. Connecteur enfichable modulaire à haute intensité (1) selon l'une des revendications précédentes, **caractérisé en ce que** la deuxième partie de boîtier (8) comporte une paroi de boîtier ouverte (10) qui peut être fermée par un couvercle de boîtier (12) ou à laquelle une autre partie de boîtier peut être fixée.

8. Connecteur enfichable modulaire à haute intensité (1) selon l'une des revendications précédentes, **caractérisé en ce que** le connecteur enfichable modulaire à haute intensité (1) comporte une troisième partie de boîtier (13).

9. Connecteur enfichable modulaire à haute intensité (1) selon la revendication précédente, **caractérisé en ce que** le connecteur enfichable modulaire à haute intensité (1) comporte d'autres parties de boîtier, en particulier une quatrième, une cinquième et une sixième partie de boîtier, et **en ce que** les autres parties de boîtier sont conçues de manière analogue à la troisième partie de boîtier (13).

10. Connecteur enfichable modulaire à haute intensité (1) selon la revendication précédente, **caractérisé en ce qu'**un élément de contact et de raccordement (5) est disposé dans chacune des deuxième partie de boîtier (8) et/ou troisième partie de boîtier (13) et/ou quatrième partie de boîtier et/ou cinquième partie de boîtier et/ou sixième partie de boîtier.

11. Connecteur enfichable modulaire à haute intensité (1) selon l'une des revendications précédentes, **caractérisé en ce que** toutes les parties de boîtier sont en aluminium moulé sous pression.

12. Connecteur enfichable modulaire à haute intensité (1) selon la revendication 1, **caractérisé en ce que** le corps isolant (19) est en polyamide.

13. Connecteur enfichable modulaire à haute intensité (1) selon l'une des revendications précédentes, **caractérisé en ce que** le contact à broche. (9) est en cuivre pur.

14. Connecteur enfichable modulaire à haute intensité (1) selon la revendication 6, **caractérisé en ce que** l'élément de contact et de raccordement ou les éléments de contact et de raccordement sont en cuivre pur.

15. Connecteur enfichable modulaire à haute intensité (1) selon l'une des revendications précédentes, **caractérisé en ce que** la première partie de boîtier (7) et la deuxième partie de boîtier (8), qui est reliée à la première, sont réalisées d'une seule pièce.

16. Connecteur enfichable modulaire à haute intensité (1) selon l'une des revendications précédentes, **caractérisé en ce qu'**au moins une partie de boîtier comporte un élément thermochrome.

17. Connecteur enfichable modulaire à haute intensité (1) selon l'une des revendications précédentes, **caractérisé en ce que** l'élément thermochrome est conçu pour indiquer visuellement une surcharge du connecteur enfichable à haute intensité (1).
